# EUROPEAN PATENT APPLICATION

(11) **EP 4 438 685 A1**
(43) Date of publication of application: **02.10.2024**
(21) Application number: 22898606.3
(22) Date of filing: 24.11.2022
(51) Int. Cl.: C09D 11/16, B43K 7/00, B43K 8/02

(54) **AQUEOUS INK COMPOSITION FOR WRITING INSTRUMENT, AND WRITING INSTRUMENT**

(30) Priority: 26.11.2021 JP 2021192108; 22.12.2021 JP 2021207972
(71) Applicant: Mitsubishi Pencil Company, Limited, Tokyo 140-8537 (JP)
(72) Inventor: NAKATA Yusuke, Tokyo 140-8537 (JP)
(74) Representative: Vossius & Partner Patentanwälte Rechtsanwälte mbB
(86) International application number: PCT/JP2022/043322
(87) International publication number: WO 2023/095824

(57) **Abstract**

[Object] To provide an aqueous ink composition for a writing instrument that forms a uniform coating film with low glossiness and is excellent in scratch resistance and water-resistant adherence even when writing is performed on a non-absorbing surface, and a writing instrument. The aqueous ink composition for a writing instrument of the present invention includes at least a coloring material, a neutralized product of an isobutylene-maleic anhydride copolymer, a polyol having two or more OH groups, a water-soluble resin and/or a resin emulsion, and water.

## Description

### Technical Field

The present specification relates to an aqueous ink composition for a writing instrument that forms a uniform coating film with low glossiness and is excellent in scratch resistance and water-resistant adherence even when writing is performed on a non-absorbing surface, and a writing instrument.

### Background Art

As typical aqueous ink compositions for a writing instruments that have good scratch resistance and water-resistant adherence, for example, the followings are known.
[1] An aqueous ink including a colorant aqueous solution produced by dissolving or dispersing a hydrophobic resin having an acidic group in water as a soluble salt using an alkali substance, in which a hydrophobic colorant selected from a hydrophobic dye or a pigment that is easily soluble in solvent is dissolved. It is characterized that the hydrophobic colorant is contained in a range of 0.5 to 10 wt.% relative to the entire ink composition, a weight ratio of the hydrophobic colorant to the hydrophobic resin is in a range of 1:5 to 5:1, and, a degree of neutralization of the hydrophobic resin having the acidic group is 0.1 or greater by using alkali (see, for example, Patent Document 1).
[2] In order to provide ink by which the handwriting has a property of sufficiently excellent water resistance, hot-water resistance, and scratch resistance even when the ink is used for writing on surfaces of glass and pottery, an aqueous ink composition for surfaces of glass and pottery includes acrylic silicone-based resin emulsion, a pigment, a dispersant, and an aqueous solvent (see, for example, Patent Document 2) .
[3] In order to provide an aqueous ink composition for a writing instrument excellent in fixability, following fixability to a non-permeable body to be written, and hard cake prevention property and redispersibility of a brilliant pigment particle, an aqueous ink composition for a writing instrument includes water, a brilliant pigment particle, a wet dispersant having an acid value and an amine value, and an elastic polymer (for example, see Patent Document 3).

However, in the aqueous ink compositions for a writing instrument and the like described in Patent Documents 1 to 3, scratch resistance, water-resistant adherence, and the like are still insufficient when writing is performed on a non-absorbing surface, and an aqueous ink composition for a writing instrument that forms a uniform coating film with low glossiness and is excellent in scratch resistance and water-resistant adherence even when writing is performed on a non-absorbing surface, and a writing instrument have been desired.

### Citation List

### Patent Document

Patent Document 1: JP H9-143410 A (Claims, Examples, and the like)
Patent Document 2: JP 2014-105282 A (Claims, Examples, and the like)
Patent Document 3: JP 2019-119855 A (Claims, Examples, and the like)

### Summary of Invention

### Technical Problem

In light of the issues of the known technologies described above and the current circumstances, the present invention is to solve this, and has an object to provide an aqueous ink composition for a writing instrument that forms a uniform coating film with low glossiness and is excellent in scratch resistance and water-resistant adherence even when writing is performed on a non-absorbing surface, and a writing instrument.

### Solution to Problem

In light of the issues of the known technologies described above and as a result of diligent studies, the present inventors found that an aqueous ink composition for a writing instrument and a writing instrument described in the above object are provided, when an aqueous ink composition for a writing instrument of the first disclosure includes at least a coloring material, a neutralized product of a copolymer having specific physical properties, a polyol having two or more OH groups, a water-soluble resin and/or a resin emulsion, and water, and when an aqueous ink composition for a writing instrument of the second disclosure includes at least a coloring material, a neutralized product of an isobutylene-maleic anhydride copolymer, a water-soluble resin and/or a resin emulsion, and water, and an acid value of a resin in the water-soluble resin and the resin emulsion is equal to or less than a predetermined value. And thus, the present inventors completed the present invention.

That is, the aqueous ink composition for a writing instrument of the first disclosure includes at least a coloring material, a neutralized product of an isobutylene-maleic anhydride copolymer, a polyol having two or more OH groups, a water-soluble resin and/or a resin emulsion, and water.

The aqueous ink composition for a writing instrument of the second disclosure includes at least a coloring material, a neutralized product of an isobutylene-maleic anhydride copolymer, a water-soluble resin and/or a resin emulsion, and water. An acid value of a resin in the water-soluble resin and the resin emulsion is 240 or less.

The neutralized product of the isobutylene-maleic anhydride copolymer preferably has a mass average molecular weight of 3000 to 400000. The coloring material is preferably a pigment.

A writing instrument according to the present invention is characterized by being charged with the aqueous ink composition for a writing instrument having the composition described above.

In the present specification, the term "present disclosure" includes both the aqueous ink composition for a writing instrument and the writing instrument of the first disclosure and the aqueous ink composition for a writing instrument and the writing instrument of the second disclosure.

### Advantageous Effects of Invention

According to the present disclosure, an aqueous ink composition for a writing instrument that forms a uniform coating film with low glossiness and is excellent in scratch resistance and water-resistant adherence even when writing is performed on a non-absorbing surface, and a writing instrument are provided.

The object and effects of the present invention can be recognized and achieved especially by using the components and combination indicated in the claims. Both general explanation described above and detailed explanation described below are exemplary and explanatory and do not limit the present disclosure described in Claims.

### Description of Embodiments

Hereinafter, embodiments of the present disclosure will be described in detail. However, note that the technical scope of the present invention is not limited to the embodiments described below and includes the invention described in Claims and equivalents thereof. The present invention can be carried out based on the contents disclosed in the present specification and technical common knowledge (including design matters and obvious matters) in the relevant field.

Aqueous Ink Composition for Writing Instrument of First Disclosure The aqueous ink composition for a writing instrument of the first disclosure includes at least a coloring material, a neutralized product of an isobutylene-maleic anhydride copolymer, a polyol having two or more OH groups, a water-soluble resin and/or a resin emulsion, and water.

### Coloring Material

Examples of the coloring material to be used in the first disclosure includes all dyes dissolved or dispersed in water, known inorganic or organic pigment systems such as titanium oxide, resin particle pigments containing a pigment, pseudo pigments produced by coloring a resin emulsion with a dye, white plastic pigments, hollow resin pigments (particles), pigments including silica or mica as a base material with multi-layer coating of iron oxide, titanium oxide, or the like as surface layers, bright pigments such as aluminum pigments, thermochromic pigments (particles), photochromic pigments (particles), and composite pigments (particles) thereof, which can be used without limitation. Examples of aluminum pigments that can be used include commercially available products such as WXM series in which an aluminum surface has been rust-proofed with a phosphorous-based compound, WL series in which an aluminum surface is rust-proofed with a molybdenum compound, EMR series in which an aluminum flake surface is coated with dense silica (all available from Toyo Aluminium K.K.), and SW-120 PM (available from Asahi Kasei Chemicals Corporation). One of these pigments may be used alone or two or more in combination as a mixture.

When titanium oxide is added, for example, it is desirable to use alumina or silica, or those treated with zirconia or zinc, and it is preferable to use rutile-type or anatase-type titanium oxide.

Examples of the dye include: acid dyes such as Eosin, Phloxine, Water Yellow #6-C, Acid Red, Water Blue #105, Brilliant Blue FCF, and Nigrosine NB; direct dyes such as Direct Black 154, Direct Sky Blue 5B, and Violet BB; and basic dyes such as rhodamine and methyl violet.

Examples of the inorganic pigment include azo lake, insoluble azo pigments, chelate azo pigments, phthalocyanine pigments, perylene or perinone pigments, and nitroso pigments. More specific examples of the inorganic pigment include inorganic pigments such as carbon black, titanium black, zinc white, red iron oxide, aluminum, chrome oxide, iron black, cobalt blue, yellow iron oxide, viridian, zinc sulfide, lithopone, cadmium yellow, vermilion, cadmium red, chrome yellow, molybdate orange, zinc chromate, strontium chromate, white carbon, clay, talc, ultramarine, precipitated barium sulfate, baryta powder, calcium carbonate, lead white, navy white, iron blue, manganese violet, aluminum powder, and brass powder, C.I. Pigment Blue 17, C.I. Pigment Blue 15, C.I. Pigment Blue 17, C.I. Pigment Blue 27, C.I. Pigment Red 5, C.I. Pigment Red 22, C.I. Pigment Red 38, C.I. Pigment Red 48, C.I. Pigment Red 49, C.I. Pigment Red 53, C.I. Pigment Red 57, C.I. Pigment Red 81, C.I. Pigment Red 104, C.I. Pigment Red 146, C.I. Pigment Red 245, C.I. Pigment Yellow 1, C.I. Pigment Yellow 3, C.I. Pigment Yellow 12, C.I. Pigment Yellow 13, C.I. Pigment Yellow 14, C.I. Pigment Yellow 17, C.I. Pigment Yellow 34, C.I. Pigment Yellow 55, C.I. Pigment Yellow 74, C.I. Pigment Yellow 95, C.I. Pigment Yellow 166, C.I. Pigment Yellow 167, C.I. Pigment Orange 5, C.I. Pigment Orange 13, C.I. Pigment Orange 16, C.I. Pigment Violet 1, C.I. Pigment Violet 3, C.I. Pigment Violet 19, C. I. Pigment Violet 23, C. I. Pigment Violet 50, and C. I. Pigment Green 7.

An example of the thermochromic pigment (particles) includes a thermochromic pigment produced by microencapsulating a thermochromic composition containing at least a leuco dye functioning as a color former, a color developer serving as a component having an ability to develop a color of the leuco dye, and a discoloration temperature adjusting agent capable of controlling a discoloration temperature in coloring of the leuco dye and the color developer such that the thermochromic composition has a predetermined average particle size (for example, 0.1 to 10 µm).

Examples of the photochromic pigment (particles) include photochromic particles composed of at least one or more selected from photochromic dyes (compound), fluorescent dyes, and the like and a resin such as a terpene phenol resin, and photochromic particles produced by microencapsulating a photochromic composition containing at least one or more selected from photochromic dyes (compound), fluorescent dyes, and the like, an organic solvent, and an additive such as an antioxidant, a light stabilizer, or a sensitizer to have a predetermined average particle size (for example, 0.1 to 10 µm).

In the present disclosure (including Examples and the like), the "average particle size" is a value measured by the laser diffraction or dynamic light scattering method. In the laser diffraction method, it is a value of D50 calculated on a volumetric basis. For example, a particle size distribution analyzer HRA9320 X100 manufactured by NIKKISO CO., LTD. can be used for this measurement. The average particle diameter using the dynamic light scattering method is a value of the average particle diameter of the cumulant method analysis in the scattering intensity distribution, which is calculated using, for example, a concentrated particle analyzer FPAR-1000 (manufactured by Otsuka Electronics Co., Ltd.).

One of these coloring materials may be used alone or two or more in combination as a mixture (hereinafter, simply referred to as "at least one").

In these coloring materials, it is desirable to use a pigment, i.e., the above-described inorganic pigment, organic pigment, a coloring resin pigment such as a pseudo pigment produced by coloring, with a dye, a resin emulsion or resin particle pigment containing a pigment, a white plastic pigment, a hollow resin pigment (particles), a pigment including silica or mica as a base material with multi-layer coating of iron oxide, titanium oxide, or the like as surface layers, a bright pigment such as an aluminum pigment, a thermochromic pigment (particles), a photochromic pigment (particles), and a composite pigment (particles) thereof, in terms of lower glossiness on a coating film and uniformity of the coating film.

Desirably, the (total) content of these coloring materials is preferably 0.5 to 50 mass%, more preferably 2 to 40 mass%, and particularly preferably 5 to 30 mass%, relative to a total amount of the aqueous ink composition for a writing instrument (hereinafter, simply referred to as "total amount of the ink composition").

When the content of the coloring material is 0.5 mass% or greater, low glossiness and uniformity of the coating film are exhibited, and formation of a more beautiful coating film can be achieved. On the other hand, when the content is 50 mass% or less, an increase in viscosity is suppressed, and the fluidity of the ink is improved, which is preferable.

The neutralized product of the isobutylene-maleic anhydride copolymer used in the first disclosure is a neutralized product of a copolymer of isobutylene and maleic anhydride. In the present invention, when used in combination with a water-soluble resin (including a resin emulsion) that will be described below, the neutralized product serves as a component that exhibits the functions of forming a coating film with low glossiness and uniformity and improving scratch resistance and water-resistant adherence.

In the neutralized product of the isobutylene-maleic anhydride copolymer to be used, the basic structure of the isobutylene-maleic anhydride copolymer is represented by Formula (I), and Formula (II) is an ammonia-neutralized product (modified product) of the isobutylene-maleic anhydride copolymer that can be preferably used in the present invention.

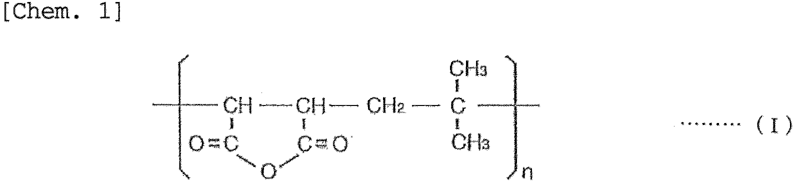

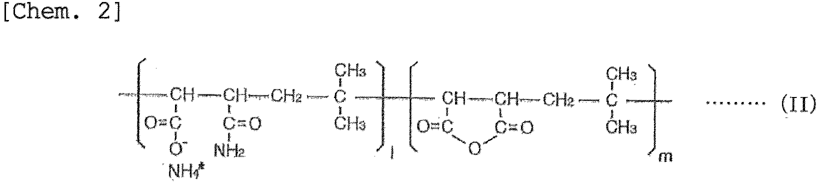

In the first disclosure, in addition to the ammonia neutralized product of Formula (II), a sodium hydroxide neutralized product or an amine neutralized product may be used. Numerical values such as n in Formula (I), 1 and m in Formula (II), and j and k in Formula (III) vary depending on the weight average molecular weight to be described below and the like, and their preferable ranges are determined.

Further, in the present invention, a neutralized product produced by neutralizing an imidized isobutylene-maleic anhydride copolymer represented by Formula (III) produced by imidizing (imide-modifying) an isobutylene-maleic anhydride copolymer, with ammonia, sodium hydroxide, amine, or the like may be used.

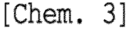

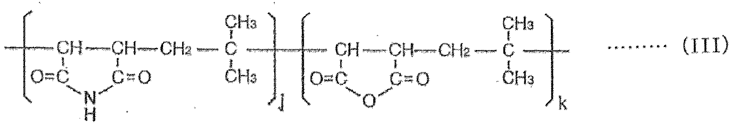

The weight average molecular weight of each neutralized product produced by neutralizing the isobutylene-maleic anhydride copolymer represented by Formula (II) or (III) is preferably 3000 to 400000, more preferably 5000 to 200000, 30000 to 100000, particularly preferably, and most preferably 50000 to 70000. The weight average molecular weight is a value in terms of polystyrene measured by aqueous gel permeation chromatography (GPC) analysis.

As the isobutylene-maleic anhydride copolymer and the neutralized product thereof, a commercially available product, such as "ISOBAM" manufactured by Kuraray Co., Ltd. is exemplified. For example, neutralized products of ISOBAM-04, ISOBAM-06, ISOBAM-10, andISOBAM-18. ISOBAM-104 and ISOBAM-110 are commercially available products of an ammonia neutralized product (modified product) of the isobutylene-maleic anhydride copolymer in Formula (II). Moreover, neutralized products of ISOBAM-304, ISOBAM-306, and ISOBAM-310 are exemplified. In the case where the neutralized product of an isobutylene-maleic anhydride copolymer [from Formula (I)] to be used is prepared, for example, neutralized products can be produced by letting the neutralization degree be 1 when all carboxyl groups of the isobutylene-maleic anhydride copolymer are neutralized, and then calculating and preparing the necessary amounts of ammonia, sodium hydroxide, amine and the like to be used for neutralization.

The content of the neutralized product of the isobutylene-maleic anhydride copolymer is preferably 0.01 to 4 mass%, more preferably 0.05 to 3 mass%, and particularly preferably 0.1 to 2 mass%, relative to the total amount of the ink composition.

When the content of the neutralized product of the isobutylene-maleic anhydride copolymer is less than 0.01 mass%, the glossiness of the coating film cannot be prevented to cause a glossy texture, and therefore a low glossiness cannot be achieved. On the other hand, when the content is more than 4 mass%, the viscosity increases, the ink ejection property decreases, and the writing property is adversely affected, in addition, cost may be increased.

Examples of the polyol having two or more OH groups used in the first disclosure include ethylene glycol, diethylene glycol, 1,2-propylene glycol, dipropylene glycol, neopentyl glycol, 2-butyl-2-ethyl-1,3-propanediol, 1,4-butanediol, 1,5-pentanediol, 3-methyl-1,5-pentanediol, 1,4-cyclohexanediol, 1,6-hexanediol, cyclohexanedimethanol, glycerin, and a sugar alcohol. As the sugar alcohol, for example, at least one of a disaccharide alcohol such as isomaltitol, maltitol, or lactitol, a trisaccharide alcohol such as maltotriitol, isomaltotriitol, or panitol, a sugar alcohol of tetrasaccharide or higher order polysaccharide such as oligosaccharide alcohol, a reduced starch saccharified product formed of sugar alcohols of disaccharides or higher order polysaccharide, and a reduced starch decomposition product can be used.

The content of the polyol having two or more OH groups is preferably 0.05 to 40 mass%, more preferably 0.1 to 30 mass%, and particularly preferably 0.5 to 20 mass%, relative to the total amount of the ink composition.

When the content of the polyol having two or more OH groups is less than 0.05 mass%, drying of the surface of the coating film rapidly proceeds, unevenness of drawn lines easily occurs, and a uniform coating film cannot be formed. On the other hand, when the content is more than 40 mass%, drying properties deteriorate, and drawn lines with low glossiness are hardly produced.

The water-soluble resin and the resin emulsion used in the first disclosure function as a fixing agent, a dispersant, and a stabilizing agent. For examples, at least one selected from water-soluble resins having a hydrophobic portion in the molecule such as polyacrylic acid, acrylic resins, water-soluble styrene-acrylic resins, water-soluble styrene-maleic acid resins, polyvinyl alcohol, polyvinyl pyrrolidone, water-soluble maleic acid resins, water-soluble styrene resins, water-soluble ester-acrylic resins, ethylene-maleic acid copolymers, polyethylene oxide, and water-soluble urethane resins, and resin emulsions such as acrylic emulsions, vinyl acetate-based emulsions, polyolefin-based emulsions, urethane-based emulsions, styrene-butadiene emulsions, styrene-acrylonitrile emulsions, silicone resin emulsions, and silicone-acrylic copolymer emulsions can be used.

Preferably, in view of dispersibility of the coloring material, viscosity adjustment, and improvement in a fixing ability, the water-soluble resin or the resin emulsion having a glass transition temperature (Tg) of 120°C or less is preferably used, and, more preferably, a water-soluble resin such as an acrylic resin, a water-soluble styrene-acrylic resin, a styrene-maleic acid resin, or a urethane resin, or the resin emulsion such as an acrylic resin emulsion, having a glass transition temperature (Tg) of 120°C or less, is desirably used. The lower limit of the glass transition temperature (Tg) is preferably -50°C or more in view of the quality of drawn lines such as low glossiness and scratch resistance.

When the glass transition temperature (Tg) of the resin is 120°C or less, cracking on the surface of the coating film can be further prevented, and the scratch resistance and the water-resistant adherence can be further improved.

In the first disclosure, the "glass transition temperature" is Tg measured in accordance with JIS K7121, and can be measured using, for example, Rigaku thermo plus evo DSC8230 (manufactured by Rigaku Corporation).

As the water-soluble resin and the resin emulsion having the character, commercially available products can be used. For example, for the water-soluble resin, Joncryl JDX-6500 (Tg: 65°C), JDX-6180 (Tg: 134°C), 52J (Tg: 56°C), 70J (Tg: 102°C), and PDX-6137A (Tg: 102°C) manufactured by BASF can be used. For the resin emulsion, Joncryl PDX-352D (Tg: 52°C), PDX-7199 (Tg: 88°C), and PDX-7537 (Tg: -4°C) manufactured by BASF, or KE-1062 (96°C) and PE-130 (Tg: 9°C)) manufactured by Seiko PMC Corporation can be used.

The content of the water-soluble resin or the resin emulsion (total: solid content) is preferably 0.1 to 20 mass%, more preferably 0.5 to 15 mass%, and particularly preferably 1 to 10 mass%, relative to the total amount of the ink composition.

When the content of the water-soluble resin or the resin emulsion is less than 0.1 mass%, the quality of the drawn lines is deteriorated in a decrease of scratch resistance or the like. On the other hand, when the content is more than 20 mass%, the viscosity increases and the ink ejection property is deteriorated.

In addition to at least the coloring material, the neutralized product of the isobutylene-maleic anhydride copolymer, the polyol having two or more OH groups, the water-soluble resin and/or the resin emulsion described above, the aqueous ink composition for a writing instrument of the first disclosure may further contain water as a solvent (tap water, purified water, distilled water, ion exchanged water, purified water, or the like), as the balance, and, as appropriate, a dispersant, a lubricant, a pH adjuster, a corrosion inhibitor, a preservative or an antibacterial agent, a thickener, or the like, within a range in which the effects of the present invention would not be impaired.

Examples of the dispersant that can be used include nonionic and anionic surfactants, and water-soluble resins. Preferably, water-soluble polymers are used.

Examples of the lubricant include non-ionic types such as fatty acid esters of polyhydric alcohols, higher fatty acid esters of sugars, polyoxyalkylene higher fatty acid esters, and alkyl phosphate esters; anionic types such as alkyl sulfonates of higher fatty acid amides and alkyl allyl sulfonates; derivatives of polyalkylene glycols, fluorochemical surfactants, and polyether modified silicones, which are also used as surface treating agents for pigments.

Examples of the pH adjuster include ammonia, urea, monoethanolamine, diethanolamine, triethanolamine, alkali metal salts of carbonic acid and phosphoric acid such as sodium tripolyphosphate and sodium carbonate, and alkali metal hydroxides such as sodium hydroxide. Examples of the corrosion inhibitor include benzotriazole, tolyltriazole, dicyclohexylammonium nitrite, and saponins. Examples of the preservative or antibacterial agent include phenol, omadine sodium, sodium benzoate, and benzimidazole compounds.

As the thickener, for example, cellulose derivatives can be used, and examples thereof include hydroxyalkyl cellulose, carboxymethylcellulose (CMC) or salts thereof, fermented cellulose, crystalline cellulose, and polysaccharides. Examples of the polysaccharides that can be used include xanthan gum, guar gum, hydroxypropylated guar gum, casein, gum arabic, gelatin, amylose, agarose, agaropectin, arabinan, curdlan, callose, carboxymethyl starch, chitin, chitosan, quince seed, glucomannan, gellan gum, tamarind seed gum, dextran, nigeran, hyaluronic acid, pustulan, funoran, HM pectin, porphyran, laminaran, lichenan, carrageenan, alginic acid, tragacanth gum, alkasy gum, succinoglycan, locust bean gum, and tara gum.

Examples of the synthetic polymer include polyacrylic acids, polyvinyl alcohol, polyethylene oxide, polyvinylpyrrolidone, polyvinyl methyl ether, bisacrylamide methyl ether, polyacrylamide, polyethyleneimine, polyethylene glycol, polydioxolane, polystyrene sulfonic acid, and polypropylene oxide.

One of these may be used alone or two or more in combination. Commercially available products of these, if present, can be used.

Regarding the aqueous ink composition for a writing instrument of the first disclosure, the aqueous ink composition for a writing instrument having excellent coloring properties can be produced by appropriately combining at least the coloring material, the neutralized product of the isobutylene-maleic anhydride copolymer, the polyol having two or more OH groups, the water-soluble resin and/or the resin emulsion, water, and other components, depending on the application of the ink for a writing instrument (e.g., for a ballpoint pen, a marking pen), and then stirring and mixing them using a stirrer such as a homomixer, a homogenizer, or a disperser, and, as necessary, further removing coarse particles in the ink composition through filtration or centrifugation. In addition, a pH level of the aqueous ink composition for a writing instrument of the present invention (at 25°C) is adjusted to preferably 5 to 10, further preferably 6 to 9.5, by using a pH adjuster or the like from the viewpoint of usability, safety, stability of the ink itself, and matching with the ink container.

The aqueous ink composition for a writing instrument of the first disclosure, which is constituted as described above, includes at least the coloring material, the neutralized product of the isobutylene-maleic anhydride copolymer, the polyol having two or more OH groups, the water-soluble resin and/or the resin emulsion, and water. In the drying process, the aggregation of the coloring material and the resin occurs to form irregularities on the surface of the coating film, but the addition of the polyol reduces the aggregation caused by the evaporation of water and promotes uniform and slow aggregation. As a result, an aqueous ink composition for a writing instrument that forms a uniform coating film with low glossiness and is excellent in scratch resistance and water-resistant adherence even when writing is performed on a non-absorbing surface is produced.

Aqueous Ink Composition for Writing Instrument of Second Disclosure An aqueous ink composition for a writing instrument of the second disclosure includes at least a coloring material, a neutralized product of an isobutylene-maleic anhydride copolymer, a water-soluble resin and/or a resin emulsion, and water, in which an acid value of a resin in the water-soluble resin and the resin emulsion is 240 or less.

The aqueous ink composition for a writing instrument of the first disclosure includes at least the coloring material, the neutralized product of the isobutylene-maleic anhydride copolymer, the polyol having two or more OH groups, the water-soluble resin and/or the resin emulsion, and water, as described above. However, in the second disclosure, without including the polyol having two or more OH groups in the first disclosure, the water-soluble resin and/or the resin emulsion having properties in which an acid value of a resin in the water-soluble resin and the resin emulsion is 240 or less is included to produce an aqueous ink composition for a writing instrument that forms a uniform coating film with low glossiness and is excellent in scratch resistance and water-resistant adherence even when writing is performed on a non-absorbing surface, as well as the aqueous ink composition for a writing instrument of the first disclosure.

Hereinafter, when each component used in the above aqueous ink composition for a writing instrument of the first disclosure can be used in the aqueous ink composition for a writing instrument of the second disclosure, the description thereof will be omitted with the above description being indicated.

In the aqueous ink composition for a writing instrument of the second disclosure, as the coloring material and the neutralized product of the isobutylene-maleic anhydride copolymer, the above-described coloring material and neutralized product of the isobutylene-maleic anhydride copolymer of the first disclosure can be used, and the range of each content and the like are also the same as those described in the first disclosure. Therefore, the detailed description thereof will be omitted.

In the second disclosure, it is necessary to use a water-soluble resin and/or a resin emulsion having such a characteristic that an acid value of a resin is 240 or less.

In the water-soluble resin and the resin emulsion used in the present invention, these resins having an acid value of 240 or less are used. The resins having this characteristic function as a fixing agent, a dispersant, a stabilizing agent by use of it.

The water-soluble resin and the resin emulsion that can be used are not particularly limited as long as an acid value of a resin is 240 or less. For example, at least one selected from water-soluble resins having a hydrophobic portion in the molecule, such as polyacrylic acid, acryl-based resin polyacrylic resins, acrylic resins, water-soluble styrene-acrylic resins, water-soluble styrene-maleic acid resins, polyvinyl alcohol, polyvinyl pyrrolidone, water-soluble maleic acid resins, water-soluble styrene resins, water-soluble ester-acrylic resins, ethylene-maleic acid copolymers, polyethylene oxide, and water-soluble urethane resins, and resin emulsions, such as acrylic emulsions, vinyl acetate-based emulsions, urethane-based emulsions, styrene-butadiene emulsions, styrene-acrylonitrile emulsions, silicone resin emulsions, and silicone-acrylic copolymer emulsions, in which an acid value of a resin is 240 or less, can be used.

Preferably, in view of dispersibility of the coloring material, viscosity adjustment, and improvement in a fixing ability, it is desirable to use a water-soluble resin such as an acrylic resin, a water-soluble styrene-acrylic resin, styrene-maleic acid or a urethane resin, or each resin emulsion such as an acrylic resin emulsion, a styrene-acrylic resin emulsion, a styrene-maleic acid resin emulsion, or a urethane-based resin emulsion, which have an acid value of 240 or less. The lower limit of the acid value is desirably 10 or more in view of the storage stability of the ink.

When the acid value of the resin is 240 or less, a uniform coating film having a lower glossiness can be formed.

The mass average molecular weight of the resin having an acid value of 240 or less is preferably 2000 or greater, more preferably 3000 to 300000, and particularly preferably 5000 to 200000. Use of the resin having a mass average molecular weight of 2000 or greater makes it possible to further improve the scratch resistance and the water-resistant adherence.

In the present invention, an "acid value of a resin" represents the number of mg of KOH required to neutralize 1 g of a resin, and is a value measured according to, for example, JIS K3054.

For the water-soluble resin and the resin emulsion, in which an acid value of a resin is 240 or less, commercially available products can be used. For the water-soluble resin, PDX-6157 (acid value: 205), JDX-6500 (acid value: 85) and PDX-6137A (acid value: 240) manufactured by BASF, andM-30 (acid value: 155) manufactured by Seiko PMC Corporation. For the resin emulsion, PDX-7741 (acid value: 52), PDX-7787 (acid value: 100) and PDX-7158 (acid value: 54) manufactured by BASF, WBR-016 (acid value: 7) manufactured by Taisei Fine Chemical Co., Ltd., and TAKELAC W 5661 (acid value: 48) manufactured by Mitsui Chemicals, Inc. can be used.

The content of the water-soluble resin or the resin emulsion (total: solid content) having these properties is preferably 0.1 to 20 mass%, and more preferably 0.5 to 15 mass%, relative to the total amount of the ink composition.

When the content of the water-soluble resin, the resin emulsion having these properties is less than 0.1 mass%, the quality of the drawn lines such as a decrease in scratch resistance is deteriorated. On the other hand, when the content is greater than 20 mass%, the viscosity increases and the ink ejection property is deteriorated.

In addition to at least the coloring material, the neutralized product of the isobutylene-maleic anhydride copolymer, the water-soluble resin and/or the resin emulsion having an acid value of a resin of 240 or less, and, as the balance, water as a solvent (tap water, purified water, distilled water, ion exchanged water, purified water, or the like), the aqueous ink composition for a writing instrument of the second disclosure may further contain, as appropriate, a dispersant, a lubricant, a pH adjuster, a corrosion inhibitor, a preservative or an antibacterial agent, a thickener, or the like, which are described in the first disclosure, within a range in which the effects of the present disclosure would not be impaired.

Each of the components (dispersant, lubricant, pH adjuster, thickener, synthetic polymer, corrosion inhibitor, preservative or antibacterial agent, thickener, etc.) other than the polyhydric alcohol is the same as the correspondent component of the first disclosure described above, and thus the description thereof is omitted.

As the polyhydric alcohol that can be used, for example, at least one of ethylene glycol, diethylene glycol, 1,2-propylene glycol, dipropylene glycol, neopentyl glycol, 2-butyl-2-ethyl-1,3-propanediol, 1,4-butanediol, 1,5-pentanediol, 3-methyl-1,5-pentanediol, 1,4-cyclohexanediol, 1,6-hexanediol, cyclohexanedimethanol can be used.

Regarding the aqueous ink composition for a writing instrument of the second disclosure, the aqueous ink composition for a writing instrument having excellent coloring properties can be produced by appropriately combining at least the coloring material, the neutralized product of the isobutylene-maleic anhydride copolymer, the water-soluble resin and/or the resin emulsion having an acid value of a resin of 240 or less, water, and other components, depending on the application of the ink for a writing instrument (e.g., for a ballpoint pen, a marking pen), and then stirring and mixing them using a stirrer such as a homomixer, a homogenizer, or a disperser, and, as necessary, further removing coarse particles in the ink composition through filtration or centrifugation.

In addition, a pH level of the aqueous ink composition for a writing instrument of the second disclosure (at 25°C) is adjusted to preferably 5 to 10, further preferably 6 to 9.5, by using a pH adjuster or the like from the perspective of usability, safety, stability of the ink itself, and compatibility with the ink container.

The aqueous ink composition for a writing instrument of the second disclosure, which is constituted as described above, includes at least the coloring material, the neutralized product of the isobutylene-maleic anhydride copolymer, the water-soluble resin and/or the resin emulsion, and water, in which an acid value of a resin in the water-soluble resin and the resin emulsion is less than 240. Combination of low acid value properties improves adhesiveness to a base material. Therefore, an aqueous ink composition for a writing instrument that forms a uniform coating film with low glossiness and is excellent in scratch resistance and water-resistant adherence even when writing is performed on a non-absorbing surface is provided.

### Writing Instrument of Present Disclosure

The writing instrument of the present disclosure is charged with the aqueous ink composition for a writing instrument having the characteristics of the first disclosure or the second disclosure. Thus, such writing instrument is capable of forming a uniform coating film with low glossiness, and is excellent in scratch resistance and water-resistant adherence even when writing is performed on a non-absorbing surface.

The ink composition of the present disclosure is charged in a ballpoint pen, a marking pen, or the like provided with a pen tip such as a ballpoint pen tip, a fiber tip, a felt tip, a plastic tip, a fiber core, or a porous core.

In the present disclosure, the "marking pen" means a pen having a mechanism for supplying ink stored in an ink storage portion to a writing portion made of a resin by capillarity and encompasses a pen referred to as "felt tip pen". In addition, the "ballpoint pen" refers to a pen having a mechanism for exuding ink stored in an ink storage portion by rotation of a ball provided in a writing portion.

The ballpoint pen includes an instrument where the aqueous ink composition for a writing instrument having the above-mentioned composition is accommodated in an ink container (refill) for a ballpoint pen having a ball with a diameter of 0.18 mm to 2.0 mm, and includes an ink follower. The ink follower is not compatible with the aqueous ink composition for a writing instrument having the above-mentioned characteristics accommodated in the ink container and includes a liquid having a small specific gravity with respect to the aqueous ink composition, for example, polybutene, silicone oil, and mineral oil. Note that the structures of the ballpoint pen and the marking pen are not particularly limited, and the ballpoint pen and the marking pen may be, for example, a direct liquid type pen provided with a collector structure (ink holding mechanism) in which a shaft cylinder works as an ink container and is filled with the aqueous ink composition for a writing instrument having the configuration described above. Examples

Next, the embodiments of the present invention will be described in further detail using examples and comparative examples, but the embodiments of the present invention are not limited to the following examples and the like.

### Aqueous Ink Composition for Writing Instruments of First Disclosure: Examples 1 to 5 and Comparative Examples 1 and 2

Aqueous ink compositions for writing instruments were prepared by an ordinary method using the blending compositions listed in Table 1 below. The pH of each of the aqueous ink compositions for a writing instrument at room temperature (25°C), when measured with a pH meter (manufactured by HORIBA, Ltd.), was within the range of 7.9 to 8.2.

Regarding each aqueous ink composition for a writing instrument produced above, a writing instrument (aqueous felt tip pen) was made by the following method, and glossiness and uniformity of the coating film, scratch resistance, and water-resistant adherence were evaluated by the respective evaluation methods described below.

These results are shown in Table 1 below.

### Preparation of Felt Tip Pen

Felt tip pens were made using each of the ink compositions produced above. Specifically, a shaft of a felt tip pen [manufactured by MITSUBISHI PENCIL CO., LTD., product name: PM-120T] was used, and each ink composition was charged into a felt tip pen composed of a shaft material of recycled PP resin, a pen core of (fine) PET fiber or (very fine) POM resin, to prepare a felt tip pen. The resulting felt tip pens of Examples 1 to 5 and Comparative Examples 1 to 4 were used to perform each evaluation.

Method for Evaluating Low Glossiness and Uniformity of Coating Film A coating film obtained by hand-painting on a PET film measuring 2 by 2 centimeters was subjected to sensory evaluation by visual observation according to the following evaluation criteria.

### Evaluation Criteria

A: The coating film has no shine and has sufficiently low glossiness.
B: Slight shine is generated on the coating film, and low glossiness is slightly weak.
C: The coating film has a shine and glossiness.

### Evaluation Method of Scratch Resistance

Five circles each having a diameter of 15 mm were continuously written by hand on a PET film. After 5 minutes, a tissue paper Kimwipe (manufactured by Nippon Paper Crecia Co., Ltd.) was placed on the drawn line, and the drawn line was rubbed 5 times with 500 g of a weight placed thereon, followed by evaluation according to the following evaluation criteria.

### Evaluation Criteria

A: There is no change from before rubbing.
B: A portion where the drawn line becomes thinner is slightly observed as compared with that before rubbing.
C: The drawn line is thinner over the entire drawn line as compared with before rubbing.

### Method for Evaluating Water-Resistant Adherence

Under environments of air temperature of 25°C and humidity of 65%, quintet spirals having a width of 15 mm was drawn eight times on a PET film, and tap water was sprayed from nozzles of a commercially available shower at a flow rate of 12 liters per minute. Then, the state of the drawn line was observed and evaluated according to the following evaluation criteria (n = 10).

### Evaluation Criteria

A: No change was observed in the drawn line.
B: The hue of the drawn line became light or the drawn line was partially chipped.
C: All of the drawn lines flowed.

**[Table 1]**

| (Total amount: 100 mass%) | | | | | | | | |
|---|---|---|---|---|---|---|---|---|
| | | Examples | | | | | Comparative Examples | |
| | | 1 | 2 | 3 | 4 | 5 | 1 | 2 |
| Colorant | Dye 1 (WATER RED I, manufactured by Orient Chemical Industries Co., Ltd.) | 5 | | | | | 5 | |
| | Pigment 1 (black pigment, Printex 25, manufactured by Degussa) | | 6 | 6 | | | | 6 |
| | Pigment 2 (carbon black, R400, manufactured by Cabot) | | | | 6 | 6 | | |
| Dispersant | Nonionic surfactant (NOIGEN EA157) *1 | | 3 | 3 | | | | 3 |
| Water-soluble resin/Resin emulsion | Joncryl JDX-6500 (Tg; 65°C, manufactured by BASF) | 5 | 5 | | | | 5 | |
| | Joncryl JDX-6180 (Tg: 134°C, manufactured by BASF) | | | 5 | | | | 5 |
| | Joncryl PDX-352D (Tg; 52°C, manufactured by BASF) | | | | 5 | 5 | | |
| Isobutylene-maleic anhydride copolymer (neutralized product) | ISOBAM 600 (mass average molecular weight 5500 to 6500) *2 | 1 | | | | | | |
| | ISOBAM 110 (ammonia-modified, mass average molecular weight 160000 to 170000) * 2 | | 0.6 | 1 | 0.6 | | | |
| | ISOBAM 18 (mass average molecular weight 300000 to 350000) * 2 | | | | | 0.6 | | |
| Polyol having two or more OH groups | Diethylene glycol | 5 | | | | | | 5 |
| | Glycerin | | 3 | | | | | |
| | Maltitol | | | 5 | | | | |
| | Maltotriitol | | | | 5 | 3 | | |
| | Methanol | | | | | | 5 | |
| Preservative | BIODEN 421 (manufactured by Daiwa Chemical Industries Co., Ltd.) | 0.3 | 0.3 | 0.3 | 0.3 | 0.3 | 0.3 | 0.3 |
| pH Modifier | Triethanolamine | 0.8 | 0.8 | 0.8 | 0.8 | 0.8 | 0.8 | 0.8 |
| Water (purified water) | | Balance | Balance | Balance | Balance | Balance | Balance | Balance |
| Low glossiness and uniformity of coating film | | B | A | A | A | A | C | C |
| Scratch resistance | | A | A | A | A | A | C | B |
| Water-resistant adhesion | | A | A | A | A | A | C | C |

| | | | | | | | | |
|---|---|---|---|---|---|---|---|---|
| *1: manufactured by DKS Co. Ltd. *2: manufactured by Kuraray Co., Ltd. | | | | | | | | |

As is clear from the results in Table 1 above, it was found that each of the aqueous ink compositions for writing instruments of Examples 1 to 5 of the first disclosure forms a uniform coating film with low glossiness and is excellent in scratch resistance and water-resistant adherence even writing is performed on a non-absorbing surface, as compared with the aqueous ink compositions for writing instruments of Comparative Examples 1 and 2 that are outside the range of the first disclosure.

### Aqueous Ink Composition for Writing Instrument of Second Disclosure: Examples 6 to 11 and Comparative Examples 3 to 5

Aqueous ink compositions for writing instruments of the second disclosure were prepared by an ordinary method using the blending compositions listed in Table 2 below. The pH of each of the aqueous ink compositions for a writing instrument at room temperature (25°C), when measured with a pH meter (manufactured by HORIBA, Ltd.), was within the range of 7.9 to 8.2.

Regarding each aqueous ink composition for a writing instrument obtained above, a writing instrument (oil-based felt tip pen) was made by the above method, and low glossiness and the uniformity of the coating film, the scratch resistance, and water-resistant adherence were evaluated by the respective evaluation methods and the evaluation criteria described in Examples and the like of the first disclosure.

These results are shown in Table 2 below.

**[Table 2]**

| (Total amount: 100 | | | | | | | | | | |
|---|---|---|---|---|---|---|---|---|---|---|
| | | Examples | | | | | | Comparative Examples | | |
| | | 6 | 7 | 8 | 9 | 10 | 11 | 3 | 4 | 5 |
| Colorant | Dye 2: WATER BLUE 10N (manufactured by Orient Chemical Industries Co., Ltd.) | 5 | 5 | | | | | 5 | 5 | 5 |
| | Pigment 3: Carbon black (MA-100, manufactured by Mitsubishi Chemical Corporation) | | | 8 | 8 | | | | | |
| | Pigment 4: RUBCOULEUR (SMD) 220, manufactured by Dainichiseika Color & Chemicals Mfg. Co., Ltd. | | | | | 10 | 10 | | | |
| Dispersant | Nonionic surfactant (Discole N518, manufactured by DKS Co. Ltd.) | | | 2 | 2 | | | | | |
| Water-soluble resin/Resin emulsion | Styrene acrylic resin (Joncryl PDX-6157, acid value 205, mass average molecular weight 6000) *3 | 5 | | | | 5 | | | | 5 |
| | Styrene acrylic resin (Joncryl PDX-6137A, acid value 240, mass average molecular weight 16500) *3 | | 5 | | | | 5 | | | |
| | Styrene acrylic resin emulsion (Joncryl PDX-7741, acid value 52, mass average molecular weight 100000 to 200000) *3 | | | 5 | | | | | | |
| | Acrylic resin (Joncryl PDX-6102B, aid value 65, mass average molecular weight 60000) *3 | | | | 5 | | | | | |
| | Styrene maleic acid resin (PL-1231 acid value 260) *4 | | | | | | | 5 | | |
| Isobutylene-maleic anhydride copolymer (neutralized product) | ISOBAM 104 (ammonia-neutralized product, mass average molecular weight 55000 to 65000) *2 | 0.6 | | 0.6 | | | 0.3 | 0.6 | | |
| | ISOBAM 600 (ammonia-neutralized product, mass average molecular weight 5500 to 6500) *2 | | | | 0.6 | | | | 0.6 | |
| | ISOBAM 110 (ammonia-neutralized product, mass average molecular weight 160000 to 170000) *2 | | 0.3 | | | 0.6 | | | | |
| Preservative | Benzisothiazoline | 0.2 | 0.2 | 0.2 | 0.2 | 0.2 | 0.2 | 0.2 | 0.2 | 0.2 |
| pH Modifier | Triethanolamine | 0.4 | 0.4 | 0.4 | 0.4 | 0.4 | 0.4 | 0.4 | 0.4 | 0.4 |
| Water (purified water) | | Balance | Balance | Balance | Balance | Balance | Balance | Balance | Balance | Balance |
| Low glossiness and uniformity of coating film | | A | A | A | A | A | A | B | C | C |
| Scratch resistance | | A | A | A | A | A | B | B | C | B |
| Water-resistant adhesion | | A | A | A | A | A | A | C | C | C |

| | | | | | | | | | | |
|---|---|---|---|---|---|---|---|---|---|---|
| *2 manufactured by Kuraray Co., Ltd. *3 manufactured by BASF *4 manufactured by Seiko PMC Corporation | | | | | | | | | | |

As is clear from the results in Table 2 above, it was found that each of the aqueous ink compositions for writing instruments of Examples 6 to 11 of the second disclosure forms a uniform coating film with low glossiness and is excellent in scratch resistance and water-resistant adherence even writing is performed on a non-absorbing surface, as compared with the aqueous ink compositions for writing instruments of Comparative Examples 3 to 5 that are outside the range of the second disclosure.

### Industrial Applicability

The aqueous ink compositions for a writing instrument according to the present invention can be suitably used as aqueous ink compositions for writing instruments such as ballpoint pens, marking pens, and the like.

## Claims

1. An aqueous ink composition for a writing instrument, the aqueous ink composition comprising:
at least a coloring material;
a neutralized product of an isobutylene-maleic anhydride copolymer;
a polyol having two or more OH groups;
a water-soluble resin and/or a resin emulsion;
and water.

2. An aqueous ink composition for a writing instrument, the aqueous ink composition comprising:
at least a coloring material;
a neutralized product of an isobutylene-maleic anhydride copolymer;
a water-soluble resin and/or a resin emulsion; and
water,
wherein an acid value of a resin in the water-soluble resin and the resin emulsion is 240 or less.

3. The aqueous ink composition for a writing instrument according to claim 1 or 2,
wherein the neutralized product of the isobutylene-maleic anhydride copolymer has a mass average molecular weight of 3000 to 400000.

4. The aqueous ink composition for a writing instrument according to claim 1 or 2,
wherein the coloring material is a pigment.

5. A writing instrument charged with the aqueous ink composition for a writing instrument described in claim 1 or 2.
